(19) **Europäisches Patentamt**

**European Patent Office**

**Office européen des brevets**

(11) Veröffentlichungsnummer: **0 149 059**
**B1**

(12) # EUROPÄISCHE PATENTSCHRIFT

(45) Veröffentlichungstag der Patentschrift:
**26.10.88**

(51) Int. Cl.⁴: **B 62 B 5/06**

(21) Anmeldenummer: **84114081.7**

(22) Anmeldetag: **22.11.84**

(54) **Griffbügel für Transportroller.**

(30) Priorität: **27.12.83 DE 3347159**

(43) Veröffentlichungstag der Anmeldung:
**24.07.85 Patentblatt 85/30**

(45) Bekanntmachung des Hinweises auf die Patenterteilung:
**26.10.88 Patentblatt 88/43**

(84) Benannte Vertragsstaaten:
**AT BE CH FR GB IT LI NL SE**

(56) Entgegenhaltungen:
**CH - A - 598 878**
**DE - U - 7 637 653**
**GB - A - 2 026 307**

(73) Patentinhaber: **LEIFHEIT Aktiengesellschaft,**
**Leifheitstrasse, D-5408 Nassau/Lahn (DE)**

(72) Erfinder: **Ohm, Heinz, Grosser Ring 5,**
**D-6250 Limburg 9 (DE)**

## Beschreibung

Die Erfindung bezieht sich auf einen Griffbügel für einen Transportroller gemäss dem Oberbegriff des Anspruchs 1.

Nach dem DE-V-74 23 156 ist ein derartiger Griffbügel bekannt. Der das zum Griffbügel geformte Rohr umschliessende Handgriff besteht aus zwei Griffhälften, die über ein Filmscharnier an der einen Längsseite verbunden sind und an der anderen Längsseite über eine einrastende Verbindung zusammengehalten werden. Nachteilig an diesem Handgriff ist, dass er bedingt durch die Verbindung der beiden Griffhälften über ein Filmscharnier nur bei annähernd geraden Rohrstücken anwendbar, beziehungsweise befestigbar ist. Des weiteren entsteht eine Trennfuge, die beim Ziehen des Transportrollers an der Handfläche reibt.

Aufgabe der Erfindung ist es, einen Griffbügel für einen Transportroller zu schaffen, der optimal in der Hand liegt, auch für runde Rohrbogen anwendbar ist und leicht gefertigt und montiert werden kann.

Diese Aufgabe wird durch die kennzeichnenden Merkmale des Anspruchs 1 gelöst. Dadurch, dass der Handgriff von der Innenseite auf den Rohrbogen aufgeklemmt ist, entsteht eine im Bereich der Auflage an der Handfläche geschlossene Griffschale. Es gibt keine störenden Trennstellen. Der Handgriff ist gleichermassen gut bei runden wie gestreckten Rohrbögen anzubringen. Er ist preiswert herzustellen und leicht zu montieren.

Weitere Ausgestaltungen der Erfindung sind den Unteransprüchen zu entnehmen. So kann bei Ausbildung des Rohrbogens über zwei sogenannte amerikanische Biegungen (Biegung mit eingeschnürter Bogeninnenseite), ein besonders schmaler Griffbügel verwirklicht werden, der nur unwesentlich breiter als eine Hand ist, wodurch eine besonders gute Führung des Transportrollers möglich wird. Durch die amerikanischen Biegungen entstehen automatisch Eindrückungen im Rohrbogen, die eine einfache Verrastung des Handgriffs ermöglichen. Die Verrastungsstege der inneren Griffschale können gleichzeitig als Distanzstege genutzt werden, um optisch einen fülligeren Handgriff zu verwirklichen.

Die weit heruntergezogenen Seitenwangen bieten eine weitere Komfortverbesserung.

Ein Ausführungsbeispiel der Erfindung wird im folgenden an Hand der Zeichnungen dargestellt. Es zeigen:

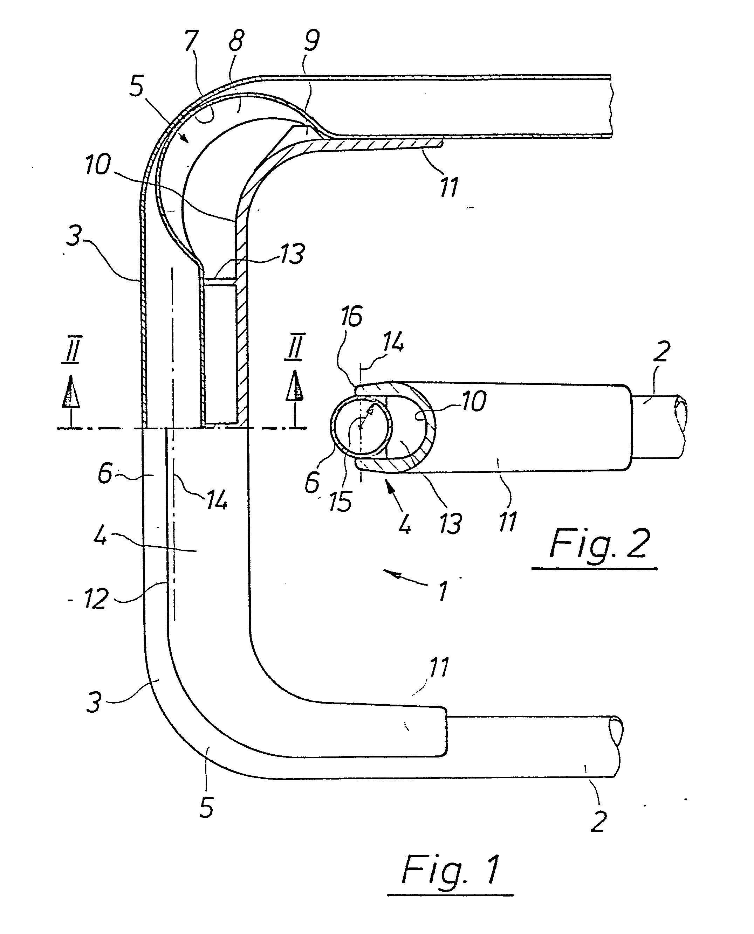

Figur 1 eine Ansicht auf einen Griffbügel eines Transportrollers, wobei die eine Hälfte im Schnitt, die andere Hälfte in der Draufsicht dargestellt ist und

Figur 2 einen Schnitt gemäss der Linie II–II in Figur 1.

Ein Griffbügel 1 eines Transportrollers besteht im wesentlichen aus einem U-förmig gebogenen Rohr mit einem Rohrbogen 3 an dem ein Handgriff 4 befestigt ist. Der Rohrbogen 3 wird durch zwei amerikanische Biegungen 5 und einem Mittelstück 6 bebildet. Die amerikanischen Biegungen 5 sind durch eine annähernd zentrische Eindrükkung 7 gekennzeichnet. Durch diese Eindrückung 7 entstehen jeweils zwei Seitenwände 8, zwischen die eine Erhebung 9 auf der Innenseite 10 des Handgriffs eingreift.

Der Handgriff 4, der als Griffschale ausgebildet ist, ist zur Aussenseite offen und mit Seitenwangen 11 versehen. Die Seitenwangen 11 liegen unter Vorspannung am Rohr 2 an.

Um aus ergonomischen Gründen höhere Seitenwände 12 zu erreichen, sind in der Griffschale Distanzstege 13 angeordnet, die in etwa der Rohrkontur angepasst sind. Die Seitenwände 12 sind etwas über die Mittellinie 14 des Mittelstücks 6 hochgezogen. Die Griffschale ist weiter im Bereich der Mittellinie 14 mit einem Innenradius 15, der dem Aussenradius des Mittelstücks 6 entspricht ausgeführt, so dass im Bereich 16 ein Hinterschnitt entsteht, der zusätzlich klemmend wirkt. Dadurch wird der Handgriff sowohl über die Seitenwangen 11 als auch den Hinterschnitt im Bereich 16 am Rohrbogen 3 gehalten.

## Patentansprüche

1. Griffbügel aus einem etwa U-förmig gebogenen Rohr (2) mit einem am Rohrbogen (3) angebrachten Handgriff (4) für einen Transportroller, insbesondere einen Einkaufsroller, dadurch gekennzeichnet, dass der Handgriff (4) als zur Aussenseite einseitig offene und von der Innenseite (10) auf den Rohrbogen (3) aufklemmbare, mit Seitenwangen (11) versehene Griffschalen ausgebildet ist, wobei die Seitenwangen (11) in etwa formschlüssig innenseitig am Rohr (2) anliegen.

2. Griffbügel nach Anspruch 1, dadurch gekennzeichnet, dass der Rohrbogen (3) durch zwei Biegungen (5) gebildet ist, und dass im Bereich des Auslaufs der Biegungen (5) Eindrückungen (7) und in der Griffschale (4) damit zusammenwirkende Erhebungen (9) vorgesehen sind.

3. Griffbügel nach Anspruch 2, dadurch gekennzeichnet, dass die Biegungen (5) als amerikanische Biegungen ausgeführt sind.

4. Griffbügel nach Anspruch 2 oder 3, dadurch gekennzeichnet, dass die Erhebungen (9) in der Griffschale (4) als zentrisch verlaufender Distanzsteg und/oder bogenförmige Querstege ausgebildet sind.

5. Griffbügel nach einem der Ansprüche 1 bis 4, dadurch gekennzeichnet, dass die Seitenwangen (11) die Biegungen (5) voll überdeckend ausgebildet sind.

## Claims

1. Handle comprising an approximately U-shaped bent tube (2) with a hand grip (4) attached to the tube bow (3), for a trolley, in particular a shipping trolley, characterized in that the hand grip (4) is designed as gripping shells open to the outside on one side and adapted to be clamped onto the tube bow (3) on the inside and also provided with side pieces (11) which bear in something of an interlocking manner against the inside of the tube (2).

2. Handle according to Claim 1, characterized in that the tube bow (3) is formed by two bends (5), and in that indentations (7) are provided in the region of the run-out of the bends (5) and elevations (9), interacting therewith, are provided in the gripping shell (4).

3. Handle according to Claim 2, characterized in that the bends (5) are made as American bends.

4. Handle according to Claim 2 or 3, characterized in that the elevations (9) in the gripping shell (4) are designed as centrally running spacer web and/or bow-shaped transverse webs.

5. Handle according to one of Claims 1 to 4, characterized in that the side pieces (11) are designed as fully covering the bends (5).

## Revendications

1. Poignée équipant un chariot, en particulier un caddy, présentant un tube (2) cintré sensiblement en U avec une partie de préhension (4) installée sur l'arceau tubulaire (3), caractérisée par le fait que la partie de préhension (4) est réalisée sous la forme de coquilles de préhension ouvertes d'un côté vers la face externe, pouvant être coincées sur l'arceau tubulaire (3) à partir de la face interne (10) et pourvues de joues (11), lesdites joues (11) étant appliquées par leur face interne contre le tube, sensiblement par concordance de formes.

2. Poignée selon la revendication 1, caractérisée en ce que l'arceau tubulaire (3) est constitué de deux cintrages (5), et en ce que dans la région de ces cintrages sont prévus des empreintes rentrantes (7) centrales, et dans la partie de préhension (4) des protubérances (9) coopérant avec ces empreintes.

3. Poignée selon la revendication 2, caractérisée en ce que les cintrages (5) sont des cintrages américains.

4. Poignée selon la revendication 2 ou 3, caractérisée en ce que les protubérances (9) de la partie de préhension (4) sont constituées sous la forme de membrures d'espacement centrales et/ou de membrures transversales arquées.

5. Poignée selon l'une quelconque des revendications 1 à 4, caractérisée en ce que les joues (11) recouvrent complètement les cintrages (5).

*Fig. 2*

*Fig. 1*

5